# EUROPÄISCHE PATENTSCHRIFT

(11) **EP 1 124 353 B1**
(45) Veröffentlichungstag und Bekanntmachung des Hinweises auf die Patenterteilung: **22.11.2006**
(21) Anmeldenummer: 01101015.4
(22) Anmeldetag: 18.01.2001
(51) Int. Cl.: H04L 12/40

(54) **Leitungssystem, insbesondere Bussystem**
Line system in particular bus system
Système filaire notamment système en bus

(30) Priorität: 10.02.2000 DE 10006025; 20.03.2000 DE 10013529
(43) Veröffentlichungstag der Anmeldung: 16.08.2001
(73) Patentinhaber: PHOENIX CONTACT GmbH & Co. Kg, 32825 Blomberg (DE)
(72) Erfinder: Heise, Heinrich, Dipl.-Ing., 32805 Horn - Bad Meinberg (DE); Leifer, Christoph, Dipl.-Ing., 33014 Bad Driburg (DE); Wattenberg, Mike, 33818 Leopoldshöhe (DE)
(74) Vertreter: Gesthuysen, von Rohr & Eggert

(56) Entgegenhaltungen:
- DE-A- 19 807 723
- US-A- 5 037 308
- US-A- 5 242 314

## Beschreibung

Die Erfindung betrifft ein Bussystem, mit einer Leitung zum Anschluß mehrerer Anschlußkomponenten, mit mehreren Verteilern zum Anschluß an die Leitung gemäß dem Oberbegriff des Patentanspruchs 1. Daneben betrifft die Erfindung noch einen Verteiler für ein derartiges Bussystem gemäß dem Oberbegriff der Patentansprüche 5 und 6.

Zur Automatisierung von elektrischen Maschinen und Anlagen werden häufig als sogenannte Bussysteme ausgebildete Leitungssysteme eingesetzt. Bussysteme sind in der Praxis üblicherweise in Form einer Linienstruktur oder aber einer Ringstruktur aufgebaut. Besondere Ausführungsformen der Linienstruktur sind die Stern- oder die Baumstruktur. Die Stern- und die Baumstruktur bieten grundsätzlich den Vorteil der flexiblen Anordnung der einzelnen Busteilnehmer bzw. Anschlußkomponenten. Nachteilig ist hierbei, daß die Diagnosemöglichkeiten bei Linienstrukturen und damit auch bei der Stern- und Baumstruktur schlecht sind. In der Regel sind genaue Lokalisierungen von Störungen in linienförmig angeordneten Leitungssystemen nicht oder ausgesprochen schwer möglich.

Bei Anwendungsfällen, bei denen der eindeutigen Lokalisierung von Störungsfällen besondere Bedeutung zukommt, werden in Ringstruktur aufgebaute Leitungssysteme verwendet. Hierbei werden die Anschlußkomponenten, ausgehend von einer Anschlußeinrichtung, wie einer Busklemme, mit einer Ringleitung verbunden. Anfang und Ende des Ringes bildet dabei die Anschlußeinrichtung. Hierdurch ist vorgegeben, daß jede Anschlußkomponente bzw. jeder Busteilnehmer an eine Eingangs- und eine Ausgangsleitung angeschlossen werden muß. Da die Eingangs- und die Ausgangsleitung selten parallel geführt werden, müssen bei der Montage eines in Ringstruktur aufgebauten Leitungssystems häufig zwei geeignete Leitungswege geschaffen werden.

Die US 5,242,314 A offenbart einen elektrischen Verteiler für ein Bussystem gemäß dem Oberbegriff der Patentansprüche 5 und 6, mit dem der Anschluß eines Flachbandkabels an eine Leiterplatte erfolgen kann. Mit Hilfe des in der US 5,242,314 A beschriebenen Verteilers können einzelne Leiter des Flachbandkabels mit Hilfe einer Vielzahl von Kontaktfedern elektrisch mit den entsprechenden Kontaktstellen auf der Leiterplatte verbunden werden.

Bei dem bekannten Verteiler erfolgt die Verbindung des Leitungseingangs mit dem Stichausgang bzw. des Stichausgangs mit dem Leitungsausgang durch die in dem Gehäuse des Verteilers an entsprechende Positionen angeordneten Kontaktfedern. Durch die Verwendung der in dem Verteiler angeordneten Kontaktfedern kann der Verteiler zwar sehr einfach an ein Flachbandkabel angeschlossen werden, die elektrische Verbindung der Leiterplatte an den Verteiler erfordert jedoch zwingend den direkten mechanischen Kontakt der Kontaktflächen der Kontaktfedern mit entsprechend ausgebildeten Kontaktstellen auf der Oberfläche der Leiterplatte. Der Anschluß einer anderen Anschlußkomponente als einer Leiterplatte an den Stichausgang des Verteilers ist bei dem bekannten Verteiler nicht beschrieben und auch nicht ohne weiteres möglich, da dies eine grundlegende Änderung im Aufbau des Verteilers erfordern würde.

Die US 5,037,308 offenbart einen aktiven Verteiler, der einen IC-Chip aufweist. Im Unterschied dazu betrifft die vorliegende Erfindung einen passiven Verteiler, bei dem einzelne Leitungen direkt vom Leitungseingang zum Leitungsausgang, vom Leitungseingang zum Stichausgang und vom Stichausgang zum Leitungsausgang geführt sind.

Aufgabe der vorliegenden Erfindung ist es nun, ein Bussystem zur Verfügung zu stellen, das einfach aufgebaut ist und eine flexible Anordnung der einzelnen Anschlußkomponenten zuläßt. Darüber hinaus liegt der Erfindung die Aufgabe zugrunde, einen Verteiler für ein Bussystem zur Verfügung zu stellen, der möglichst einfach aufgebaut und daher kostengünstig herzustellen ist und darüber hinaus auch für unterschiedliche Anschlußkomponenten verwendbar ist.

Die zuvor genannte Aufgabe ist bei einem Bussystem gemäß dem Oberbegriff des Patentanspruchs 1 dadurch gelöst, daß zur Verbindung der Anschlußkomponente mit dem Stichausgang des Verteilers eine Stichleitung vorgesehen ist, wobei die Stichleitung für eine als Busteilnehmer ausgebildete Anschlußkomponente lediglich für jeden Signalleiter der Leitung zwei Signalleiterabschnitte aufweist, die Stichleitung für eine Sicherheits-Anschlußkomponente lediglich zwei Sicherheitsleiterabschnitte aufweist, oder die Stichleitung für eine Steuer-Anschlußkomponente lediglich zwei Versorgungsleiterabschnitte aufweist.

Kennzeichnend für die vorliegende Erfindung ist, daß die an das erfindungsgemäße Bussystem angeschlossenen Anschlußkomponenten nicht einen eingangsseitigen und einen ausgangsseitigen Anschluß haben, sondern nur einen einzigen Anschluß, der mit dem Stichausgang des Verteilers verbunden ist. Durch die erfindungsgemäße Ausgestaltung werden die Vorteile der Ringstruktur mit denen der Linienstruktur und damit der Stern- und Baumstruktur vereinigt. Die erfindungsgemäße Ausgestaltung gestattet also nicht nur umfangreiche und genaue Diagnosemöglichkeiten, sondern auch die flexible Anordnung der einzelnen Anschlußkomponenten. Außerdem läßt sich das erfindungsgemäße Bussystem schnell und einfach verschalten. Des weiteren ist es ohne weiteres möglich, auf vorkonfektionierte Komponenten zurückzugreifen.

Um die Vorteile der Linienstruktur bei dem erfindungsgemäßen Bussystem, nutzen zu können ist zur Verbindung der jeweiligen Anschlußkomponente mit dem Stichausgang des Verteilers jeweils eine Stichleitung vorgesehen. Auf diese Weise kann den jeweiligen Bedürfnissen entsprechend ohne weiteres an eine Ringstruktur eine Stern- oder Baumstruktur angeschlossen werden.

Häufig ist es bei Bussystemen der eingangs beschriebenen Art erforderlich, daß nicht nur Busteilnehmer, also einzelne zum Bussystem gehörende Anschlußkomponenten erforderlich sind, sondern auch Steuer- und Sicherheitskomponenten. Für diese Anschlußkomponenten sind in der Regel sogenannte Sicherheits- und Versorgungsschaltungen erforderlich, die üblicherweise parallel zu den Busleitungen in separaten Leitungen geführt sind. Bei der erfindungsgemäßen Ausgestaltung ist nun vorgesehen, daß im Leitungsabschnitt wenigstens ein Signalleiter und wenigstens ein als Sicherheits- oder Versorgungsleiter ausgebildeter weiterer Leiter vorgesehen sind. Bei dieser Ausgestaltung werden damit zwei an sich unabhängige Systeme in einer Leitung bzw. in einem Leitungsabschnitt geführt, wobei die Plazierung der einzelnen Systemkomponenten über Verteiler ohne weiteres frei wählbar ist.

Bei einer bevorzugten Ausführungsform der Erfindung sind zwei Signalleiter, ein Sicherheitsleiter und zwei Versorgungsleiter in jedem Leitungsabschnitt vorgesehen.

Im übrigen ist es auch bei Zusammenfassung unterschiedlicher Leiter in einem Leitungsabschnitt einer Leitung unproblematisch, die einzelnen Leiter als elektrische Leiter, als Lichtwellenleiter oder aber zum Teil als elektrische und zum Teil als Lichtwellenleiter auszubilden.

Wie zuvor ausgeführt worden ist, bietet es sich an, unterschiedliche Leiter in einer Leitung zusammenzufassen, wenn sowohl als Busteilnehmer ausgebildete Anschlußkomponenten als auch Steuer- und/oder Sicherheits-Anschlußkomponenten vorgesehen sind. Zum Anschluß der unterschiedlichen Anschlußkomponenten sind bei der erfindungsgemäßen Ausgestaltung sowohl unterschiedlich ausgebildete Verteiler als auch unterschiedlich ausgebildete Stichleitungen erforderlich. Grundsätzlich ist es zwar möglich, die Verteiler so auszubilden, daß über den Stichausgang sowohl als Busteilnehmer ausgebildete Anschlußkomponenten als auch Steuer- und/oder Sicherheits-Anschlußkomponenten angeschlossen werden können. Hierbei müßten die Stichausgänge jedoch entsprechend vielpolig ausgebildet sein, was einen hohen Platzbedarf zur Folge hat. Bevorzugt ist es daher, die Stichausgänge nur derart zu belegen, daß entweder als Busteilnehmer ausgebildete Anschlußkomponenten oder Steuer- und/oder Sicherheits-Anschlußkomponenten angeschlossen werden können. Ein Verschalten kann dabei über eine entsprechende Kodierung zwischen dem Stichausgang und der Stichleitung sichergestellt werden.

Die vorliegende Erfindung betrifft im übrigen einen Verteiler für das zuvor beschriebene Bussystem, wobei der Verteiler versehen ist mit einem Leitungseingang zum Anschluß eines Leitungsabschnittes einer Leitung, einem Leitungsausgang zum Anschluß eines weiteren Leitungsabschnittes und einem Stichausgang zum Anschluß einer Anschlußkomponente.

Zuvor ist dargelegt worden, daß das erfindungsgemäße Bussystem es ermöglicht, unterschiedliche Leiter in einer Leitung ringförmig zu führen, wobei für die unterschiedlichen Anschlußkomponenten unterschiedlich ausgebildete Verteiler vorgesehen sind. Für die unterschiedlichen Anwendungsfälle ist daher eine Ausbildung des Verteilers gemäß den Patentansprüchen 5 und 6 derart vorgesehen, daß entweder der Signalleiter oder der weitere Leiter im Verteiler vom Leitungseingang zum Leitungsausgang durchgeschleift ist, während der jeweils andere Leiter am Stichausgang zum Anschluß der Anschlußkomponente aufgetrennt ist.

Im einzelnen weist der für eine als Busteilnehmer ausgebildete Anschlußkomponente verwendete Verteiler gemäß Patentanspruch 5 zwei vom Leitungseingang zum Leitungsausgang durchgeschleifte Versorgungsleitungsabschnitte und einen vom Leitungseingang zum Leitungsausgang durchgeschleiften Sicherheitsleiterabschnitt auf. Dabei ist für jeden Signalleiter ein vom Leitungseingang zum Stichausgang geführter eingangsseitiger Signalleiterabschnitt und ein vom Stichausgang zum Leitungsausgang geführter ausgangsseitiger Signalleiterabschnitt vorgesehen. Bei zwei Signalleitern der Leitung des Leitungssystems sind dann vier Signalleiterabschnitte vorgesehen.

Soll der Verteiler für eine Steuer- und/oder Sicherheits-Anschlußkomponente verwendet werden, ist gemäß Patentanspruch 6 wenigstens ein vom Leitungseingang zum Leitungsausgang durchgeschleifter Signalleiterabschnitt vorgesehen. Für jeden Sicherheitsleiter ist ein vom Leitungseingang zum Stichausgang geführter eingangsseitiger Sicherheitsleiterabschnitt vorgesehen, während ein vom Stichausgang zum Leitungsausgang geführter ausgangsseitiger Sicherheitsleiterabschnitt vorgesehen ist. Außerdem sind zwei vom Leitungseingang zum Leitungsausgang durchgeschleifte Versorgungsleiterabschnitte vorgesehen, wobei von jedem Versorgungsleiterabschnitt ein Versorgungsleiter zum Stichausgang abgezweigt ist. Dadurch ist es möglich, zum Anschluß einer Steuer-Anschlußkomponente und einer Sicherheits-Anschlußkomponente nur einen Typ von Verteiler zu verwenden, wobei am Stichausgang sowohl zwei Sicherheitsleiterabschnitte als auch zwei Versorgungsleiterabschnitte vorgesehen sind.

Wie zuvor bereits erwähnt worden ist, sind die Stichleitungen für die verschiedenen möglichen Anschlußkomponenten unterschiedlich. Die für eine als Busteilnehmer ausgebildete Anschlußkomponente vorgesehene Stichleitung weist lediglich für jeden Signalleiter des Leitungssystems zwei Signalleiterabschnitte auf. Ist die Stichleitung für eine Steuer-Anschlußkomponente vorgesehen, sind lediglich zwei Versorgungsleiterabschnitte vorgesehen. Schließlich weist die Stichleitung lediglich zwei Sicherheitsleiterabschnitte auf, wenn sie zum Anschluß für eine Sicherheits-Anschlußkomponente dient.

Zuvor ist die Lehre der Erfindung insbesondere in bezug auf ein Bussystem mit einer ringförmig geführten Leitung beschrieben worden. Dessen ungeachtet kann die Lehre der Erfindung jedoch auch bei einem in Form einer Linienstruktur ausgeführten Bussystem angewendet werden. Das gilt insbesondere für ein Bussystem, wie es unter der Marke "PROFIBUS" bekannt ist. Zu diesem Bussystem wird auf den Entwurf einer PROFIBUS Richtlinie, "Anschlusstechnik für "PROFIBUS", Version 1.0, Februar 2000, Best.-Nr. 2.141, verwiesen.

Nachfolgend wird die Erfindung anhand der Zeichnung näher beschrieben. Dabei zeigt
- Fig. 1: eine schematische Darstellung eines erfindungsgemäßen Bussystems,
- Fig. 2: eine schematische Darstellung einer Ausführungsform eines erfindungsgemäßen Verteilers und
- Fig. 3: eine schematische Darstellung einer anderen Ausführungsform eines erfindungsgemäßen Verteilers.

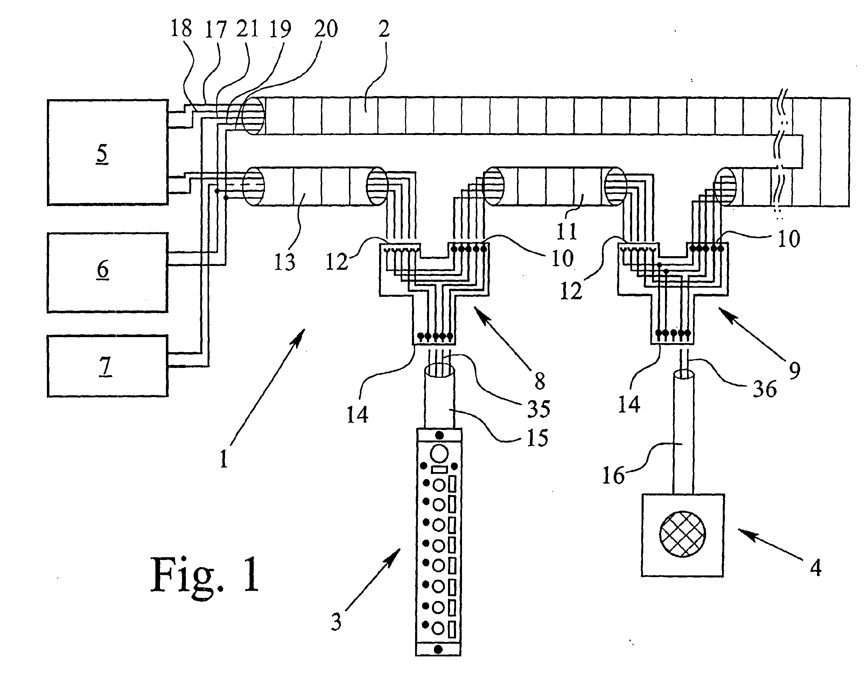

In Fig. 1 ist ein erfindungsgemäßes Leitungssystem 1 dargestellt, bei dem es sich vorliegend um ein Bussystem handelt. Das Leitungssystem 1 weist eine ringförmig geführte Leitung 2 auf, an die wenigstens eine Anschlußkomponente angeschlossen ist. Im dargestellten Ausführungsbeispiel sind nur zwei Anschlußkomponenten 3, 4 vorgesehen. Es versteht sich, daß eine Vielzahl weiterer Anschlußkomponenten vorgesehen sein kann. Endseitig ist die Leitung 2 mit einer Anschlußeinrichtung 5 verbunden. Bei der Anschlußeinrichtung 5 handelt es sich vorliegend um eine Busklemme. Des weiteren ist eine Versorgung 6 sowie eine Sicherheitsauswertung 7 vorgesehen. Es darf an dieser Stelle darauf hingewiesen werden, daß es sich bei der dargestellten Ausführungsform um ein bevorzugtes Ausführungsbeispiel der vorliegenden Erfindung handelt; grundsätzlich ist es nicht erforderlich, daß die Versorgung 6 und/oder die Sicherheitsauswertung 7 vorgesehen sind.

Wesentlich ist nun, daß das Leitungssystem 1 zum Anschluß jeder Anschlußkomponente 3, 4 an die Leitung 2 einen Verteiler 8, 9 aufweist. Jeder der Verteiler 8, 9 weist einen Leitungseingang 10 zum Anschluß eines Leitungsabschnittes 11 der Leitung 2, einen Leitungsausgang 12 zum Anschluß eines weiteren Leitungsabschnittes 13 der Leitung 2 und einen Stichausgang 14 zum Anschluß einer Anschlußkomponente 3, 4 auf. Dabei ist zur Verbindung der einzelnen Anschlußkomponenten 3, 4 mit den Stichausgängen 14 der jeweiligen Verteiler 8, 9 jeweils eine Stichleitung 15, 16 vorgesehen.

Wie sich aus Fig. 1 ergibt, weist die Leitung 2, die aus einer Vielzahl von Leitungsabschnitten 11, 13 besteht, zwei Signalleiter 17, 18, zwei Versorgungsleiter 19, 20 und einen Sicherheitsleiter 21 auf. Die beiden Signalleiter 17, 18 sind endseitig mit der Anschlußeinrichtung 5 verbunden, während die Versorgungsleiter 19, 20 an die Versorgung 6 angeschlossen sind. Schließlich ist der Sicherheitsleiter 21 mit der Sicherheitsauswertung 7 endseitig verbunden.

Nicht dargestellt ist, daß die Signalleiter 17, 18, die Versorgungsleiter 19, 20 und der Sicherheitsleiter 21 entweder jeweils als elektrische Leiter oder aber als Lichtwellenleiter ausgebildet sein können. Jedenfalls ist es innerhalb der Leitung 2 bzw. der einzelnen Leitungsabschnitte 11, 13 ohne weiteres möglich, auch unterschiedliche Typen von Leitern, also elektrische Leiter und Lichtwellenleiter zu verwenden.

Wie sich insbesondere aus Fig. 1 ergibt, handelt es sich bei den Anschlußkomponenten 3, 4 um unterschiedliche Baueinheiten bzw. Module. Die Anschlußkomponente 3 ist als Busteilnehmer zum Anschluß an die Signalleitungen 17, 18 ausgebildet. Bei der Anschlußkomponente 3 kann es sich beispielsweise um einen Sensor oder einen Aktuator handeln. Bei der Anschlußkomponente 4 handelt es sich hingegen um eine Sicherheits-Anschlußkomponente, über die vorliegend die Funktion "Notaus" ausgeführt werden kann. Die Sicherheits-Anschlußkomponente ist zum Anschluß an den Sicherheitsleiter 21 vorgesehen. Nicht dargestellt ist eine Anschlußkomponente, die mit den Versorgungsleitungen 19, 20 zu verbinden ist und zu Steuerzwecken dient.

Für die unterschiedlich ausgebildeten Anschlußkomponenten 3, 4 sind unterschiedliche Verteiler 8, 9 und auch unterschiedlich ausgebildete Stichleitungen 15, 16 vorgesehen. Unterschiede bestehen bei den Verteilern 8, 9 jedoch nicht hinsichtlich ihres äußeren Aufbaus. Wie zuvor bereits beschrieben, weist jeder Verteiler 8, 9 einen Leitungseingang 10, einen Leitungsausgang 12 und einen Stichausgang 14 auf, so daß jeder der Verteiler 8, 9 T- oder Y-förmig ausgebildet ist. Unterschiedlich ist lediglich die Verdrahtung innerhalb der einzelnen Verteiler 8, 9. Grundsätzlich sind die Verteiler 8, 9 dabei derart ausgebildet sind, daß entweder die Signalleiter 17, 18 oder die Versorgungsleiter 19, 20 bzw. der Sicherheitsleiter 21 im Verteiler 8, 9 vom Leitereingang 10 zum Leiterausgang 12 durchgeschleift sind, während die jeweils anderen Leiter zum Stichausgang 14 zum Anschluß der jeweiligen Anschlußkomponente 3, 4 aufgetrennt oder abgezweigt sind.

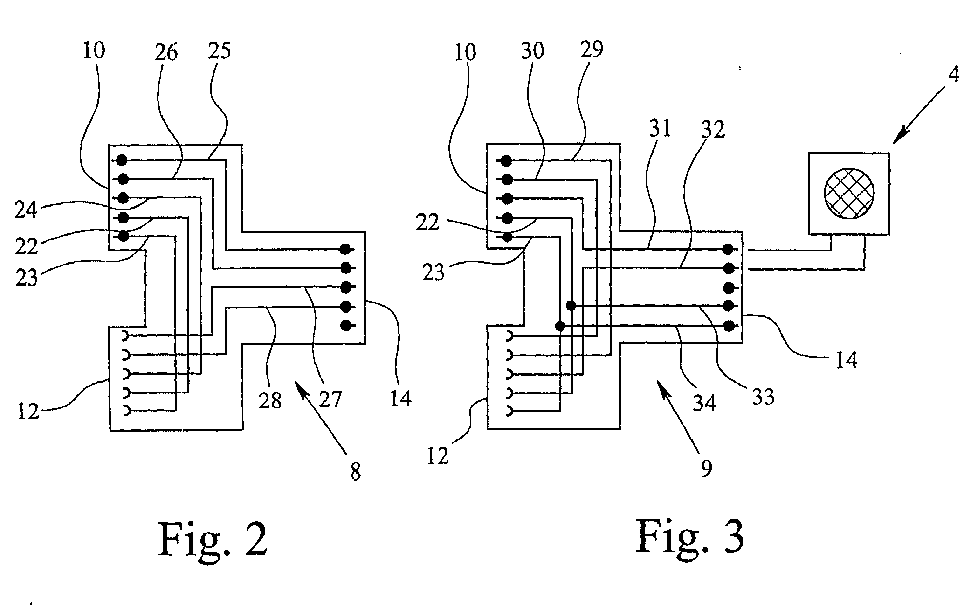

In Fig. 2 ist eine Ausführungsform dargestellt, bei der der Verteiler 8 für eine als Busteilnehmer ausgebildete Anschlußkomponente 3, also zum Anschluß an die Signalleiter 17, 18 vorgesehen ist. Der Verteiler 8 weist auf zwei vom Leitungseingang 10 zum Leitungsausgang 12 durchgeschleifte Versorgungsleiterabschnitte 22, 23 und einen vom Leitungseingang 10 zum Leitungsausgang durchgeschleiften Sicherheitsleiterabschnitt 24. Weiterhin sind zur Verbindung mit den beiden Signalleitern 17, 18 zwei vom Leitungseingang 10 zum Stichausgang 14 geführte eingangsseitige Signalleiterabschnitte 25, 26 und zwei vom Stichausgang 14 zum Leitungsausgang 12 geführte ausgangsseitige Signalleiterabschnitte 27, 28 vorgesehen. Der Verteiler 8 ist eingangsleitungsseitig und auch ausgangsleitungsseitig jeweils fünfpolig, wobei sämtliche Pole belegt sind. Auch stichausgangsseitig ist der Verteiler 8 fünfpolig, wobei jedoch nur vier Pole belegt sind.

In Fig. 3 ist ein Verteiler 9 für eine Steuer- und eine Sicherheits-Anschlußkomponente dargestellt. Der Verteiler 9 weist hierbei zwei vom Leitungseingang 10 zum Leitungsausgang 12 durchgeschleifte Signalleiterabschnitte 29, 30 auf. Weiter ist zur Verbindung mit dem Sicherheitsleiter 21 ein vom Leitungseingang 10 zum Stichausgang 14 geführter eingangsseitiger Sicherheitsleiterabschnitt 31 und ein vom Stichausgang 14 zum Leitungsausgang 12 geführter ausgangsseitiger Sicherheitsleiterabschnitt 32 vorgesehen. Weiterhin weist der Verteiler 9 zwei vom Leitungseingang zum Leitungsausgang durchgeschleifte Versorgungsleiterabschnitte 22, 23 auf, wobei von jedem Versorgungsleiterabschnitt 22, 23 ein Versorgungsleiter 33, 34 zum Stichausgang 14 abgezweigt ist. Wie bei der zuvor beschriebenen Ausführungsform ist der Verteiler 9 eingangs- und ausgangsleitungsseitig fünfpolig, wobei alle Pole belegt sind. Stichausgangsseitig sind von den fünf Polen nur vier belegt.

Wie sich insbesondere aus Fig. 1 ergibt, weist die Stichleitung 15 für die Anschlußkomponente 3 entsprechend den Signalleiterabschnitten 25, 26, 27, 28 vier Signalleiterabschnitte 35 auf. Die Stichleitung 16 weist nur zwei Sicherheitsleiterabschnitte 36 auf. Nicht dargestellt ist die Stichleitung für eine Steuer-Anschlußkomponente. Diese weist, entsprechend der Anzahl der beiden Versorgungsleiterabschnitte 33, 34 ebenfalls nur zwei Versorgungsleiterabschnitte auf.

## Patentansprüche

1. Bussystem, mit einer Leitung (2) zum Anschluß mehrerer Anschlußkomponenten (3, 4), mit mehreren Verteilern (8, 9) zum Anschluß an die Leitung (2),
wobei die Verteiler (8, 9) je einen Leitungseingang (10) zum Anschluß eines Leitungsabschnittes (11) der Leitung (2), einen Leitungsausgang (12) zum Anschluß eines weiteren Leitungsabschnittes (13) der Leitung (2) und einen Stichausgang (14) zum Anschluß einer Anschlußkomponente (3, 4) aufweisen,
wobei in den Leitungsabschnitten (11, 13) wenigstens ein Signalleiter (17, 18) und wenigstens ein als Versorgungsleiter (19, 20) oder als Sicherheitsleiter (21) ausgebildeter weiterer Leiter vorgesehen ist, und
wobei mindestens eine Leitung (17, 18, 19, 20, 21) innerhalb des Verteilers (8, 9) vom Leitungseingang (10) zum Leitungsausgang (12) geführt ist, mindestens eine Leitung (17, 18, 19, 20, 21) innerhalb des Verteilers (8, 9) vom Leitungseingang (10) zum Stichausgang (14) geführt ist und mindestens eine Leitung (17, 18, 19, 20, 21) innerhalb des Verteilers (8, 9) vom Stichausgang (14) zum Leitungsausgang (12) geführt ist,
**dadurch gekennzeichnet,**
**daß** zur Verbindung der Anschlußkomponente (3, 4) mit dem Stichausgang (14) des Verteilers (8, 9) eine Stichleitung (15, 16) vorgesehen ist, wobei
die Stichleitung (15) für eine als Busteilnehmer ausgebildete Anschlußkomponente (3) lediglich für jeden Signalleiter (17, 18) der Leitung (2) zwei Signalleiterabschnitte (35) aufweist,
die Stichleitung für eine Sicherheits-Anschlußkomponente lediglich zwei Sicherheitsleiterabschnitte aufweist, oder
die Stichleitung (16) für eine Steuer-Anschlußkomponente lediglich zwei Versorgungsleiterabschnitte (36) aufweist.

2. Bussystem nach Anspruch 1, **dadurch gekennzeichnet, daß** zwei Signalleiter (17, 18), zwei Versorgungsleiter (19, 20) und ein Sicherheitsleiter (21) in der Leitung (2) bzw. in den Leitungsabschnitten (11, 13) vorgesehen sind.

3. Bussystem nach Anspruch 1 oder 2, **dadurch gekennzeichnet, daß** der Signalleiter, der Versorgungsleiter oder der Sicherheitsleiter als elektrischer Leiter oder als Lichtwellenleiter ausgebildet sind bzw. ist.

4. Bussystem nach einem der Ansprüche 1 bis 3, **dadurch gekennzeichnet, daß** wenigstens eine als Busteilnehmer zur Verbindung mit dem Signalleiter (17, 18) ausgebildete Anschlußkomponente (3) und wenigstens eine Steuer- und/oder Sicherheits-Anschlußkomponente vorgesehen sind.

5. Verteiler für ein Bussystem (1) nach einem der vorhergehenden Ansprüche, mit einem Leitungseingang (10) zum Anschluß eines Leitungsabschnittes (11) einer Leitung (2), einem Leitungsausgang (12) zum Anschluß eines weiteren Leitungsabschnittes (13) der Leitung (2) und einem Stichausgang (14) zum Anschluß einer Anschlußkomponente (3, 4), wobei mindestens eine Leitung (17, 18, 19, 20, 21) innerhalb des Verteilers (8) vom Leitungseingang (10) zum Leitungsausgang (12) geführt ist, mindestens eine Leitung (17, 18, 19, 20, 21) innerhalb des Verteilers (8) vom Leitungseingang (10) zum Stichausgang (14)geführt ist und mindestens eine Leitung (17, 18, 19, 20, 21) innerhalb des Verteilers (8) vom Stichausgang (14) zum Leitungsausgang (12) geführt ist,
**dadurch gekennzeichnet,**
**daß** der Verteiler (8) für eine als Busteilnehmer ausgebildete Anschlußkomponente (3) zwei vom Leitungseingang (10) zum Leitungsausgang (12) durchgeschleifte Versorgungsleiterabschnitte (22, 23) und einen vom Leitungseingang (10) zum Leitungsausgang (12) durchgeschleiften Sicherheitsleiterabschnitt (24) aufweist, und
**daß** für jeden Signalleiter (17, 18) ein vom Leitungseingang (10) zum Stichausgang (14) geführter eingangsseitiger Signalleiterabschnitt (25, 26) und ein vom Stichausgang (14) zum Leitungsausgang (12) geführter ausgangsseitiger Signalleiterabschnitt (27, 28) vorgesehen ist,
wobei der Verteiler (8) eingangsleitungsseitig, ausgangsleitungsseitig und stichausgangsseitig jeweils fünfpolig ausgeführt ist, wobei eingangs- und ausgangsleitungsseitig sämtliche Pole belegt sind, während stichausgangsseitig nur vier Pole belegt sind.

6. Verteiler für ein Bussystem (1) nach einem der vorhergehenden Ansprüche, mit einem Leitungseingang (10) zum Anschluß eines Leitungsabschnittes (11) einer Leitung (2), einem Leitungsausgang (12) zum Anschluß eines weiteren Leitungsabschnittes (13) der Leitung (2) und einem Stichausgang (14) zum Anschluß einer Anschlußkomponente (3, 4), wobei mindestens eine Leitung (17, 18, 19, 20, 21) innerhalb des Verteilers (9) vom Leitungseingang (10) zum Leitungsausgang (12) geführt ist, mindestens eine Leitung (17, 18, 19, 20, 21) innerhalb des Verteilers (9) vom Leitungseingang (10) zum Stichausgang (14) geführt ist und mindestens eine Leitung (17, 18, 19, 20, 21) innerhalb des Verteilers (9) vom Stichausgang (14) zum Leitungsausgang (12) geführt ist,
**dadurch gekennzeichnet,**
**daß** der Verteiler (9) für eine Steuer- und/oder Sicherheits-Anschlußkomponente wenigstens einen vom Leitungseingang (10) zum Leitungsausgang (12) durchgeschleiften Signalleiterabschnitt (29, 30) aufweist,
**daß** für jeden Sicherheitsleiter (21) ein vom Leitungseingang (10) zum Stichausgang (14) geführter eingangsseitiger Sicherheitsleiterabschnitt (31) und ein vom Stichausgang (14) zum Leitungsausgang (12) geführter ausgangsseitiger Sicherheitsleiterabschnitt (32) vorgesehen ist, und
**daß** der Verteiler (9) zwei vom Leitungseingang (10) zum Leitungsausgang (12) durchgeschleifte Versorgungsleiterabschnitte (22, 23) aufweist, wobei von jedem Versorgungsleiterabschnitt (22, 23) ein Versorgungsleiter (33, 34) zum Stichausgang (24) abgezweigt ist,
wobei der Verteiler (8) eingangsleitungsseitig, ausgangsleitungsseitig und stichausgangsseitig jeweils fünfpolig ausgeführt ist, wobei eingangs- und ausgangsleitungsseitig sämtliche Pole belegt sind, während stichausgangsseitig nur vier Pole belegt sind.

## Claims

1. Bus system having a line (2) for connecting a plurality of terminal components (3, 4), with a plurality of distributors (8, 9) for connection to the line (2),
in which the distributors (8, 9) each have a line input (10) for connecting one line section (11) of the line (2), a line output (12) for connecting a further line section (13) of the line (2), and a spur output (14) for connecting a terminal component (3, 4),
in which there are provided in the line sections (11, 13) at least one signal conductor (17, 18) and at least one further conductor designed as a supply conductor (19, 20) or as a safety conductor (21), and
in which at least one line (17, 18, 19, 20, 21) within the distributor (8, 9) is led from the line input (10) to the line output (12), at least one line (17, 18, 19, 20, 21) within the distributor (8, 9) is led from the line input (10) to the spur output (14), and at least one line (17, 18, 19, 20, 21) within the distributor (8, 9) is led from the spur output (14) to the line output (12),
**characterized in that** a spur line (15, 16) is provided for connecting the terminal component (3, 4) to the spur output (14) of the distributor (8, 9), wherein
the spur line (15) for a terminal component (3) designed as a bus user has two signal conductor sections (35) only for each signal conductor (17, 18) of the line (2),
the spur line for a safety terminal component has two safety conductor sections only, or
the spur line (16) for a control terminal component has two supply conductor sections (36) only.

2. Bus system according to Claim 1, **characterized**
**in that** two signal conductors (17, 18), two supply conductors (19, 20) and one safety conductor (21) are provided in the line (2) or in the line sections (11, 13) respectively.

3. Bus system according to Claim 1 or 2,
**characterized in that** the signal conductor, the supply conductor or the safety conductor is/are designed as electrical conductors or as fibre-optic conductors.

4. Bus system according to one of Claims 1 to 3,
**characterized in that** at least one terminal component (3) designed as a bus user for connection to the signal conductor (17, 18) and at least one control and/or safety terminal component are provided.

5. Distributor for a bus system (1) according to one of the preceding claims, having a line input (10) for connecting one line section (11) of a line (2), a line output (12) for connecting a further line section (13) of the line (2), and a spur output (14) for connecting a terminal component (3, 4), in which at least one line (17, 18, 19, 20, 21) within the distributor (8) is led from the line input (10) to the line output (12), at least one line (17, 18, 19, 20, 21) within the distributor (8) is led from the line input (10) to the spur output (14), and at least one line (17, 18, 19, 20, 21) within the distributor (8) is led from the spur output (14) to the line output (12),
**characterized in that** the distributor (8) for a terminal component (3) designed as a bus user has two supply conductor sections (22, 23) looped through from the line input (10) to the line output (12) and one safety conductor section (24) looped through from the line input (10) to the line output (12),
and **in that** there are provided for each signal conductor (17, 18) one input-side signal conductor section (25, 26) led from the line input (10) to the spur output (14) and one output-side signal conductor section (27, 28) led from the spur output (14) to the line output (12),
wherein the distributor (8) is designed on the input line side, output line side and spur output side with five terminals in each case, with all terminals being assigned on the input and output line sides whereas only four terminals are assigned on the spur output side.

6. Distributor for a bus system (1) according to one of the preceding claims, having a line input (10) for connecting one line section (11) of a line (2), a line output (12) for connecting a further line section (13) of the line (2), and a spur output (14) for connecting a terminal component (3, 4), in which at least one line (17, 18, 19, 20, 21) within the distributor (9) is led from the line input (10) to the line output (12), at least one line (17, 18, 19, 20, 21) within the distributor (9) is led from the line input (10) to the spur output (14), and at least one line (17, 18, 19, 20, 21) within the distributor (9) is led from the spur output (14) to the line output (12),
**characterized in that** the distributor (9) for a control and/or safety terminal component has at least one signal conductor section (29, 30) looped through from the line input (10) to the line output (12),
**in that** there are provided for each safety conductor (21) one input-side safety conductor section (31) led from the line input (10) to the spur output (14) and one output-side safety conductor section (32) led from the spur output (14) to the line output (12),
and **in that** the distributor (9) has two supply conductor sections (22, 23) looped through from the line input (10) to the line output (12), with one supply conductor (33, 34) branching off from each supply conductor section (22, 23) to the spur output (24),
wherein the distributor (8) is designed on the input line side, output line side and spur output side with five terminals in each case, with all terminals being assigned on the input and output line sides whereas only four terminals are assigned on the spur output side.

## Revendications

1. Système de bus avec une ligne (2) pour brancher plusieurs composants de raccordement (3, 4) avec plusieurs distributeurs (8, 9) à brancher sur la ligne (2),
les distributeurs (8, 9) comportant chacun une entrée de ligne (10) pour brancher un tronçon de ligne (11) de la ligne (2), une sortie de ligne (12) pour brancher un autre tronçon de ligne (13) de la ligne (2) et une sortie de branchement (14), pour brancher un composant de raccordement (3, 4), au moins un conducteur d'acheminement de signaux (17, 18) et au moins un conducteur supplémentaire conçu sous la forme d'un conducteur d'alimentation (19, 20) ou d'un conducteur de sécurité (21) étant prévus dans les tronçons de ligne (11, 13), et
au moins une ligne (17, 18, 19, 20, 21) étant tirée à l'intérieur du distributeur (8, 9), de l'entrée de ligne (10) vers la sortie de ligne (12), au moins une ligne (17, 18, 19, 20, 21) étant tirée à l'intérieur du distributeur (8, 9), de l'entrée de ligne (10) vers la sortie de branchement (14) et au moins une ligne (17, 18, 19, 20, 21) étant tirée à l'intérieur du distributeur (8, 9), de la sortie de branchement (14) vers la sortie de ligne (12),
**caractérisé en ce que**
une ligne de branchement (15, 16) est prévue pour la liaison des composants de raccordement (3, 4) avec la sortie de branchement (14) du distributeur (8, 9),
la ligne de branchement (15) comporte deux tronçons de conducteur d'acheminement de signaux (35) pour un composant de branchement (3) conçu sous la forme d'un abonné au bus, uniquement pour chaque conducteur d'acheminement de signaux (17, 18) de la ligne (2),
la ligne de branchement comporte uniquement deux tronçons de conducteur de sécurité pour un composant de raccordement de sécurité ou
la ligne de branchement (16) comporte uniquement deux tronçons de conducteur d'alimentation (36) pour un composant de raccordement de commande.

2. Système de bus selon la revendication 1, **caractérisé en ce qu'**on a prévu dans la ligne (2), respectivement dans les tronçons de ligne (11, 13) deux conducteurs d'acheminement de signaux (17, 18), deux conducteurs d'alimentation (19, 20) et un conducteur de sécurité (21).

3. Système de bus selon la revendication 1 ou 2, **caractérisé en ce que** le conducteur d'acheminement de signaux, le conducteur d'alimentation ou le conducteur de sécurité est ou sont conçu(s) sous la forme de conducteurs électriques ou de guides d'ondes optiques.

4. Système de bus selon l'une quelconque des revendications 1 à 3, **caractérisé en ce qu'**on a prévu au moins un composant de raccordement (3) conçu sous la forme d'un abonné au bus, pour la liaison avec le conducteur d'acheminement de signaux (17, 18) et au moins un composant de raccordement de commande et/ou de sécurité.

5. Distributeur pour un système de bus (1) selon l'une quelconque des revendications précédentes, avec une entrée de ligne (10) pour brancher un tronçon de ligne (11) d'une ligne (2), une sortie de ligne (12) pour brancher un autre tronçon de ligne (13) de la ligne (2) et une sortie de branchement (14), pour brancher un composant de raccordement (3, 4), au moins une ligne (17, 18, 19, 20, 21) étant tirée à l'intérieur du distributeur (8), de l'entrée de ligne (10) vers la sortie de ligne (12), au moins une ligne (17, 18, 19, 20, 21) étant tirée à l'intérieur du distributeur (8), de l'entrée de ligne (10) vers la sortie de branchement (14) et au moins une ligne (17, 18, 19, 20, 21) étant tirée à l'intérieur du distributeur (8, 9), de la sortie de branchement (14) vers la sortie de ligne (12),
**caractérisé en ce que**
le distributeur (8) comporte pour un composant de raccordement (3) conçu sous la forme d'un abonné au bus deux tronçons de conducteur d'alimentation (22, 23) bouclés de l'entrée de ligne (10) vers la sortie de ligne (12) et un tronçon de conducteur de sécurité (24) bouclé de l'entrée de ligne (10) vers la sortie de ligne (12) et
**en ce que** pour chaque conducteur d'acheminement de signaux (17, 18), on a prévu un tronçon de conducteur d'acheminement de signaux (25, 26) côté entrée, tiré de l'entrée de ligne (10) vers la sortie de branchement (14) et un tronçon de conducteur d'acheminement de signaux (27, 28) côté sortie, tiré de la sortie de branchement (14) vers la sortie de ligne (12),
le distributeur (8) étant respectivement réalisé avec cinq pôles côté ligne d'entrée, côté ligne de sortie et côté sortie de branchement, l'ensemble des pôles étant occupé côté ligne d'entrée et côté ligne de sortie, alors que seulement quatre pôles sont occupés côté sortie de branchement.

6. Distributeur pour un système de bus (1) selon l'une quelconque des revendications précédentes, avec une entrée de ligne (10) pour brancher un tronçon de ligne (11) d'une ligne (2), une sortie de ligne (12) pour brancher un autre tronçon de ligne (13) de la ligne (2) et une sortie de branchement (14), pour brancher un composant de raccordement (3, 4), au moins une ligne (17, 18, 19, 20, 21) étant tirée à l'intérieur du distributeur (9), de l'entrée de ligne (10) vers la sortie de ligne (12), au moins une ligne (17, 18, 19, 20, 21) étant tirée à l'intérieur du distributeur (9), de l'entrée de ligne (10) vers la sortie de branchement (14) et au moins une ligne (17, 18, 19, 20, 21) étant tirée à l'intérieur du distributeur (9), de la sortie de branchement (14) vers la sortie de ligne (12),
**caractérisé en ce que**
le distributeur (9) comporte pour un composant de raccordement de commande et/ou de sécurité au moins un tronçon de conducteur d'acheminement de signaux (29, 30), bouclé de l'entrée de ligne (10) vers la sortie de ligne (12),
**en ce que** pour chaque conducteur de sécurité (21), on a prévu un tronçon de conducteur de sécurité (31) côté entrée, tiré de l'entrée de ligne (10) vers la sortie de branchement (14) et un tronçon de conducteur de sécurité (32) côté sortie, tiré de la sortie de branchement (14) vers la sortie de ligne (12) et
**en ce que** le distributeur (9) comporte deux tronçons de conducteur d'alimentation (22, 23), bouclés de l'entrée de ligne (10) vers la sortie de ligne (12), un conducteur d'alimentation (33, 34) dérivant de chaque tronçon de conducteur d'alimentation (22, 23) vers la sortie de branchement (24),
le distributeur (8) étant réalisé respectivement avec cinq pôles, côté entrée de ligne, côté sortie de ligne et côté sortie de branchement, l'ensemble des pôles étant occupé côté ligne d'entrée et côté ligne de sortie, alors que seulement quatre pôles sont occupés côté sortie de branchement.
